# EUROPEAN PATENT APPLICATION

(11) **EP 2 884 056 A1**
(43) Date of publication of application: **17.06.2015**
(21) Application number: 14197053.3
(22) Date of filing: 09.12.2014
(51) Int. Cl.: F01D 21/02, F01D 25/16, F02C 3/107, F02C 7/36

(54) **Systems and methods involving multiple torque paths for gas turbine engines**

(30) Priority: 11.12.2013 US 201314102602
(71) Applicant: UNITED TECHNOLOGIES CORPORATION, Hartford, CT 06101 (US)
(72) Inventor: McCune, Michael E., Colchester, CT Connecticut 06415 (US); Merry, Brian D., Andover, CT Connecticut 06232 (US); Suciu, Gabriel L., Glastonbury, CT Connecticut 06033 (US)
(74) Representative: Hull, James Edward

(57) **Abstract**

A turbofan engine (100) includes a fan (140), a compressor section (102), a combustor (104) in fluid communication with the compressor section (102), a turbine section (106) in fluid communication with the combustor (104), a shaft (108) configured to be driven by the turbine section (106) and coupled to the compressor section (102) through a first torque load path (120), and a speed reduction mechanism (138), configured to be driven by the shaft through a second torque load path (122) separate from the first load path, for rotating the fan.

## Description

### BACKGROUND

### 1. Technical Field

This disclosure generally relates to gas turbine engines.

### 2. Description of the Related Art

A gas turbine engine typically incorporates a spool that mechanically interconnects rotating components of a turbine with rotating components of a corresponding compressor. In order to accommodate axial loads of the spool, one or more thrust bearings typically are provided. Unfortunately, mechanical failure of a spool forward of the thrust bearing can decouple the load provided by the fan and compressor from the turbine, thereby resulting in an overspeed of the turbine. Such an overspeed can be severe enough to cause turbine disks and blades to fail structurally. Specifically, structural failure of a turbine disk can cause the disk to break into multiple pieces and depart the engine by penetrating a casing that surrounds the turbine. In order to alleviate this concern, turbine disks and associated blades oftentimes are designed to accommodate such overspeed conditions resulting in the use of heavier, more robust components.

### SUMMARY

A turbofan engine according to an exemplary embodiment of this disclosure, among other possible things includes a fan, a compressor section, a combustor in fluid communication with the compressor section, a turbine section in fluid communication with the combustor, a shaft configured to be driven by the turbine section and coupled to the compressor section through a first torque load path, and a speed reduction mechanism configured to be driven by the shaft through a second torque load path separate from the first load path for rotating the fan.

In a further embodiment of any of the foregoing turbofan engines, includes an intersection between the first torque load path and the shaft and a thrust bearing located adjacent to the intersection between the first torque path and the first shaft.

In a further embodiment of any of the foregoing turbofan engines, the compressor section includes a first compressor section immediately aft of the fan and the first torque load path couples the shaft to the first compressor section.

In a further embodiment of any of the foregoing turbofan engines, includes a first spool segment mechanically coupling the shaft to the compressor section and defining the first torque load path.

In a further embodiment of any of the foregoing turbofan engines, includes a second spool segment mechanically coupling the shaft to the speed reduction mechanism and defining the second torque load path.

In a further embodiment of any of the foregoing turbofan engines, the first spool segment is operative to transfer torque from the shaft to the compressor and not to the speed reduction mechanism.

In a further embodiment of any of the foregoing turbofan engines, the second spool segment is operative to transfer torque from the shaft to the speed reduction mechanism and not the compressor.

In a further embodiment of any of the foregoing turbofan engines, includes a case annularly surrounding the turbine and an electronic engine control configured to generate outputs to reduce rotational speed of the turbine responsive to failure of at least one of the first spool segment and the second spool segment.

A turbofan engine according to an exemplary embodiment of this disclosure, among other possible things includes a fan. A compressor section is in communication with the fan. The fan is configured to communicate a portion of air into a bypass path defining a bypass area outwardly of the compressor section and a portion into the compressor section and a ratio of air communicated through the bypass path relative to air communicated to the compressor is greater than about six 6.0. A combustor is in fluid communication with the compressor section. A turbine section is in fluid communication with the combustor. A shaft is configured to be driven by the turbine section and coupled to the compressor section through a first torque load path. A speed reduction mechanism is configured to be driven by the shaft through a second torque load path separate from the first load path for rotating the fan.

In a further embodiment of any of the foregoing turbofan engines, includes a first mechanical coupling between the shaft and the compressor section defining the first torque load path and a second mechanical coupling between the shaft and the speed reduction mechanism defining the second torque load path. Each of the first mechanical coupling and the second mechanical coupling are operative to transfer torque loads responsive to a mechanical failure of the other of the first mechanical coupling and the second mechanical coupling.

In a further embodiment of any of the foregoing turbofan engines, includes an intersection between the first torque load path and the shaft and a thrust bearing located adjacent to the intersection between the first torque path and the first shaft.

In a further embodiment of any of the foregoing turbofan engines, the compressor section includes a first compressor section and a second compressor section and the turbine includes a first turbine section coupled to the shaft and a second turbine section coupled to drive the second compressor section.

In a further embodiment of any of the foregoing turbofan engines, the first turbine section includes four or more stages.

In a further embodiment of any of the foregoing turbofan engines, the bypass ratio is greater than about 8.0.

In a further embodiment of any of the foregoing turbofan engines, the bypass ratio in a range between about eleven (11) and seventeen (17).

In a further embodiment of any of the foregoing turbofan engines, the engine is configured such that a fan pressure ratio across the fan is less than about 1.45, when measured at sea-level and at a static, full-rated take off power.

In a further embodiment of any of the foregoing turbofan engines, the engine is configured such that the first turbine section includes a pressure ratio greater than about 5:1 between a pressure measured prior to an inlet of the first turbine section and a pressure measured at an outlet of the first turbine section, when measured at sea-level and at a static, full-rated take off power.

In a further embodiment of any of the foregoing turbofan engines, the fan section includes a plurality of fan blades and the first turbine section includes a plurality of rotors with a ratio of the number of fan blades to the number of rotors in the first turbine section being between about 3.3 and about 8.6.

In a further embodiment of any of the foregoing turbofan engines, the speed reduction mechanism includes an epicyclic gearbox.

In a further embodiment of any of the foregoing turbofan engines, the epicyclic gearbox provides a speed reduction ratio between about 2:1 and about 5:1.

Other systems, methods, features and/or advantages of this disclosure will be or may become apparent to one with skill in the art upon examination of the following drawings and detailed description. It is intended that all such additional systems, methods, features and/or advantages be included within this description and be within the scope of the present disclosure.

### BRIEF DESCRIPTION OF THE DRAWINGS

Many aspects of the disclosure can be better understood with reference to the following drawings. The components in the drawings are not necessarily to scale. Moreover, in the drawings, like reference numerals designate corresponding parts throughout the several views.
FIG. 1 is a schematic view of an example turbofan engine.
FIG. 2 is a schematic diagram depicting an embodiment of a system involving multiple torque pads.
FIG. 3 is a schematic diagram of the embodiment of FIG. 1, showing representative regions of potential mechanical failure.
FIG. 4 is a schematic diagram depicting another embodiment of a system involving multiple torque paths.
FIG. 5 is a flowchart depicting functionality of an embodiment of a system involving multiple torque paths.

### DETAILED DESCRIPTION

Systems and methods involving multiple torque paths for gas turbine engines are provided. In this regard, several exemplary embodiments will be described. In particular, these embodiments incorporate the use of multiple torque paths, e.g., two such paths, that are used to transfer torque from the turbine of a gas turbine engine to other components. For example, one of the torque paths can be used for transferring torque to a compressor, while the another torque path can be used for providing torque to a gearbox, which is used to rotate a fan. Notably, use of separate torque paths can potentially prevent an overspeed condition of a turbine when one or more components defining one of the torque paths mechanically fails. That is, even if one of the torque paths experiences a mechanical failure that uncouples a load from the turbine, the component being driven by the other of the torque paths still provides a load to the turbine. In some embodiments, this ability to prevent turbine overspeed potentially allows for use of less robust, and oftentimes lighter, components in the turbine which can result in improved gas turbine engine efficiency.

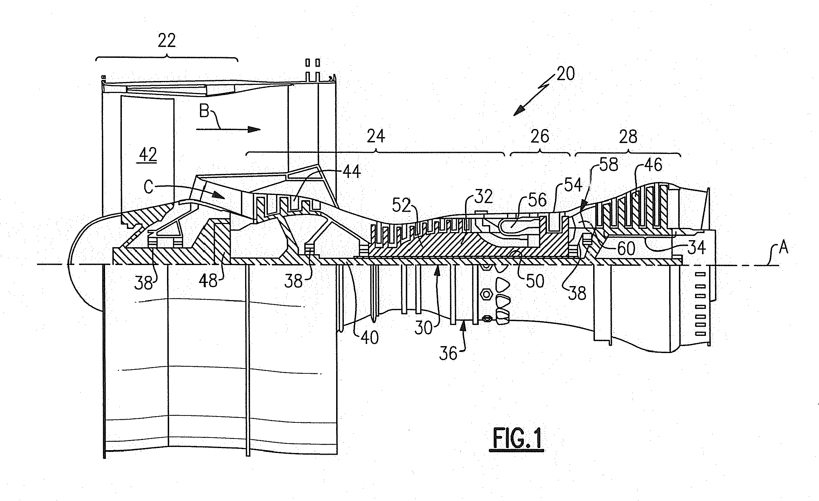

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 58 of the engine static structure 36 is arranged generally between the high pressure turbine 54 and the low pressure turbine 46. The mid-turbine frame 58 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 58 includes airfoils 60 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is within a range between about eleven (11) and seventeen (17), the fan diameter is significantly larger than that of the low pressure compressor 44, and the low pressure turbine 46 has a pressure ratio that is greater than about five 5:1, when measured at sea-level and at a static, full-rated take off power. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet. The flight condition of 0.8 Mach and 35,000 ft, with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45, when measured at sea-level and at a static, full-rated take off power. "Low corrected fan tip speed" is the actual fan tip speed in ft/sec divided by an industry standard temperature correction of [(Tram °R) / (518.7 °R)]0.5. The "Low corrected fan tip speed" as disclosed herein according to one non-limiting embodiment is less than about 1150 ft / second, when measured at sea-level and at a static, full-rated take off power.

The example gas turbine engine includes the fan 42 that comprises in one non-limiting embodiment less than about twenty-six (26) fan blades. In another non-limiting embodiment, the fan section 22 includes less than about twenty (20) fan blades. Moreover, in one disclosed embodiment the low pressure turbine 46 includes no more than about six (6) turbine rotors schematically indicated at 34. In another non-limiting example embodiment the low pressure turbine 46 includes about three (3) turbine rotors. A ratio between the number of fan blades 42 and the number of low pressure turbine rotors is between about 3.3 and about 8.6. The example low pressure turbine 46 provides the driving power to rotate the fan section 22 and therefore the relationship between the number of turbine rotors 34 in the low pressure turbine 46 and the number of blades 42 in the fan section 22 disclose an example gas turbine engine 20 with increased power transfer efficiency.

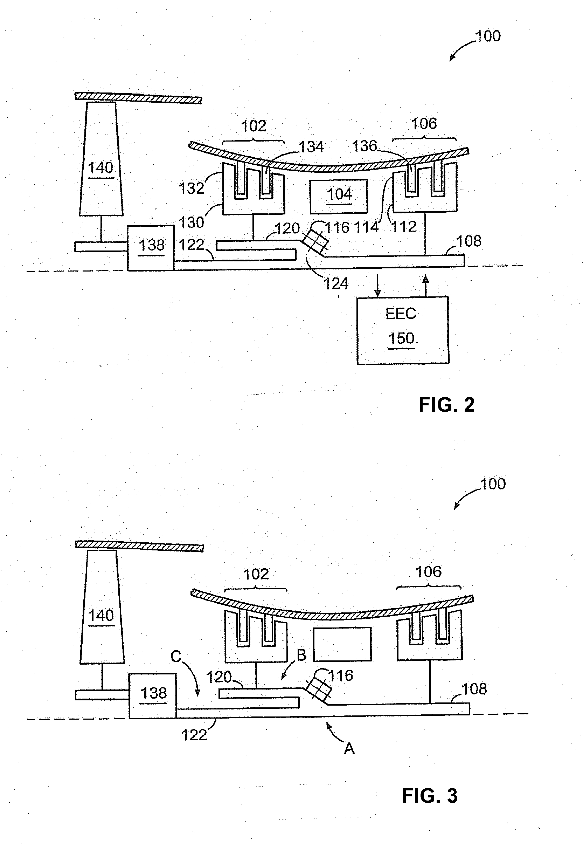

Referring now in more detail to the drawings, FIG. 2 is a schematic diagram depicting an exemplary embodiment of a system involving multiple torque paths. As shown in FIG 2, system 100 is generally configured as a geared turbofan gas turbine engine that incorporates a compressor 102, a combustion section 104, a turbine 106 (e.g., a high pressure turbine) and a shaft 108. The shaft 108 is mechanically coupled to rotating components of the turbine, including turbine disks (such as turbine disk 112) and associated blades (such as blades 114).

From the turbine, shaft 108 extends forward to the compressor. However, in contrast to gas turbine engines that include a single torque path for each spool, two torque paths are provided forward of a thrust bearing 116. In particular, system 100 includes a first torque path or spool segment 120 and a second torque path or spool segment 122. The spool segments 120, 122 interconnect with the shaft at an intersection 124 located adjacent to thrust bearing 116. Notably, the thrust bearing accommodates axial loads of the shaft and prevents movement of the shaft in an aft direction, *i.e.,* toward the turbine, if the first and second spool segments were to fail.

Spool segment 120 is mechanically coupled to the compressor. That is, the first spool segment is mechanically coupled to compressor 130, which includes blades (e.g., blade 132). Notably, vanes (e.g., vane 134) are interposed between the rotating sets of compressor blades.

Spool segment 122 is mechanically coupled to a gearbox 138. Gearbox 138 is used to provide torque to a gear-driven fan 140.

An electronic engine control (EEC) 150 also is provided. The EEC 150 receives inputs corresponding to engine operating parameters and provides corresponding outputs for controlling operation of the gas turbine engine. Although desirable, it should be noted that the EEC may not be able to adequately control rotating speed of a turbine responsive to a total failure of a spool forward of a thrust bearing. In contrast to a spool that provides a single torque path from the turbine forward of a thrust bearing, the embodiment of FIG. 1, however, potentially alleviates this situation by dividing the torque provided by the turbine between multiple torque paths; in this case, first and second torque paths.

In this regard, reference is made to the schematic diagram of FIG. 3, which identifies three general areas of spool 108 that may be subjected to mechanical failure. In particular, FIG. 3 depicts location A (located aft of thrust bearing 116), location B (located along spool segment 120), and location C (located along spool segment 122). Notably, mechanical failure of the spool at location A causes the portion of the spool aft of the failure to move axially aft. As such, the turbine blades tend to clash with the adjacent vanes. Although resulting in turbine failure, such blade clashing may reduce a tendency of the turbine to overspeed to the point of turbine disk liberation.

In contrast, mechanical failure of the first spool segment 120 (location B) results in load of the gearbox and the gear-driven fan being applied via the second spool segment 122 to the turbine. Similarly, mechanical failure of the second spool segment 122 (location C) results in load of the compressor being applied via the first spool segment 120 to the turbine. Since at least a portion of the normal operating load is still applied to the turbine via a remaining torque path despite failure of one of the spool segments, the EEC may have adequate time to respond to any sensed failure. As such, the EEC may be able to provide outputs to reduce the rotational speed of the turbine, thereby potentially avoiding a critical overspeed.

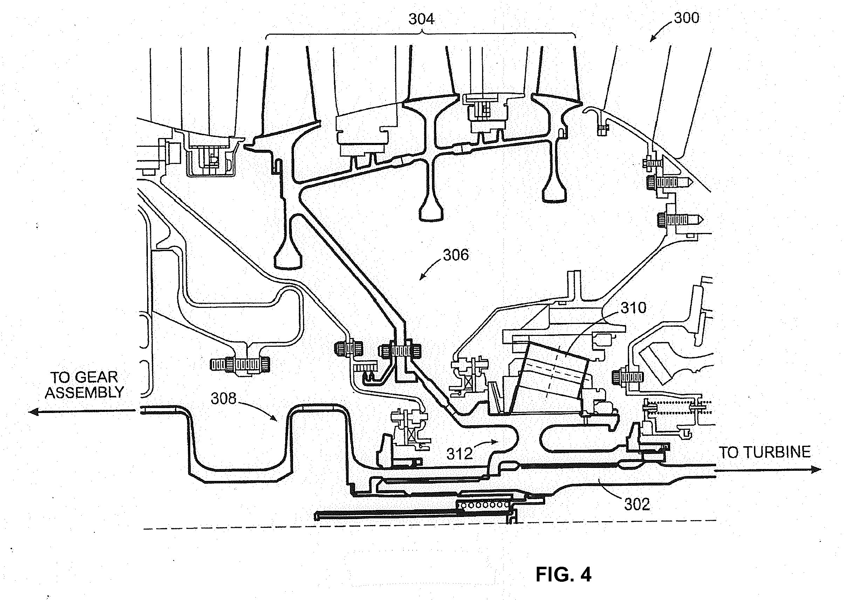

FIG. 4 is a schematic diagram of another embodiment of a system involving multiple torque paths. In particular, FIG. 4 schematically depicts a portion of a gas turbine engine 300 including a shaft 302, a compressor 304, a first torque path 306, a second torque path 308 and a thrust bearing 310. Note that the rotating components of the gas turbine are shaded to visually distinguish those components from other components of the gas turbine.

In operation, torque is provided from a turbine (not shown) to compressor 304 via shaft 302 and torque path 306. Additionally, torque is provided from the turbine to a gearbox (not shown) via shaft 302 and torque path 308. Note that the torque path 306 diverges from torque path 308 at an intersection 312, which is located in a vicinity of the thrust bearing 310.

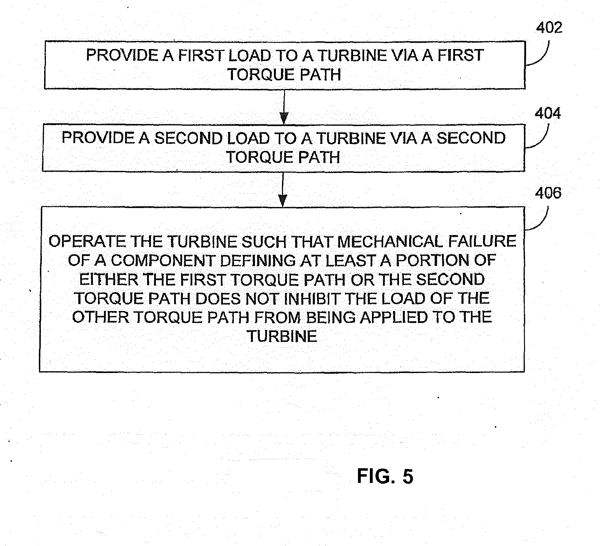

FIG. 5 is a flowchart depicting functionality of an embodiment of a system involving multiple torque paths. Specifically, FIG. 5 depicts an embodiment of a method for reducing overspeed potential of a power turbine of a gas turbine engine. In this regard, the functionality (or method) may be construed as beginning at block 402, in which a first load is provided to the turbine via a first torque path. In some embodiments, the first load can be associated with a compressor of the gas turbine engine. In block 404, a second load is provided to the turbine via a second torque path. In some embodiments, the second load can be associated with a gear assembly of the gas turbine engine. In block 406, the turbine is operated such that: mechanical failure of a component defining at least a portion of the first torque path does not inhibit the second load from being applied to the turbine via the second torque path; and mechanical failure of a component defining the second torque path does not inhibit the first load from being applied to the turbine via the first torque path.

It should be emphasized that the above-described embodiments are merely possible examples of implementations set forth for a clear understanding of the principles of this disclosure. Many variations and modifications may be made to the above-described embodiments without departing substantially from the spirit and principles of the disclosure. All such modifications and variations are intended to be included herein within the scope of this disclosure and protected by the accompanying claims.

## Claims

1. A turbofan engine comprising:
a fan;
a compressor section;
a combustor in fluid communication with the compressor section;
a turbine section in fluid communication with the combustor;
a shaft configured to be driven by the turbine section and coupled to the compressor section through a first torque load path; and
a speed reduction mechanism, configured to be driven by the shaft through a second torque load path separate from the first load path, for rotating the fan.

2. The turbofan engine as recited in claim 1, comprising:
an intersection between the first torque load path and the shaft; and
a thrust bearing located adjacent to the intersection between the first torque path and the first shaft.

3. The turbofan engine as recited in claim 1 or 2, wherein the compressor section includes a first compressor section immediately aft of the fan and the first torque load path couples the shaft to the first compressor section.

4. The turbofan engine as recited in any of claims 1 to 3, comprising a first spool segment mechanically coupling the shaft to the compressor section and defining the first torque load path, and optionally a second spool segment mechanically coupling the shaft to the speed reduction mechanism and defining the second torque load path.

5. The turbofan engine as recited in claim 4, wherein the first spool segment is operative to transfer torque from the shaft to the compressor and not to the speed reduction mechanism.

6. The turbofan engine as recited in claim 4 or 5, wherein the second spool segment is operative to transfer torque from the shaft to the speed reduction mechanism and not the compressor.

7. The turbofan engine as recited in any of claims 4 to 6, comprising a case annularly surrounding the turbine and an electronic engine control configured to generate outputs to reduce rotational speed of the turbine responsive to failure of at least one of the first spool segment and the second spool segment.

8. The turbofan engine of any preceding claim, wherein the compressor section is in communication with the fan, the fan is configured to communicate a portion of air into a bypass path defining a bypass area outwardly of the compressor section and a portion into the compressor section, and a ratio of air communicated through the bypass path relative to air communicated to the compressor is greater than six.

9. The turbofan engine as recited in any preceding claim, comprising a first mechanical coupling between the shaft and the compressor section defining the first torque load path and a second mechanical coupling between the shaft and the speed reduction mechanism defining the second torque load path, wherein each of the first mechanical coupling and the second mechanical coupling are operative to transfer torque loads responsive to a mechanical failure of the other of the first mechanical coupling and the second mechanical coupling.

10. The turbofan engine as recited in any preceding claim, wherein the compressor section includes a first compressor section and a second compressor section and the turbine includes a first turbine section coupled to the shaft and a second turbine section coupled to drive the second compressor section.

11. The turbofan engine as recited in claim 10, wherein the first turbine section includes four or more stages.

12. The turbofan engine as recited in claim 10 or 11, wherein the bypass ratio is greater than eight, or between eleven and seventeen.

13. The turbofan engine as recited in any of claims 10 to 12, wherein:
the engine is configured such that a fan pressure ratio across the fan is less than about 1.45 when measured at sea-level and at a static, full-rated take off power; and/or
the engine is configured such that the first turbine section includes a pressure ratio greater than about 5:1 between a pressure measured prior to an inlet of the first turbine section and a pressure measured at an outlet of the first turbine section, when measured at sea-level and at a static, full-rated take off power

14. The turbofan engine as recited in any of claims 10 to 13, wherein the fan section includes a plurality of fan blades and the first turbine section includes a plurality of rotors with a ratio of the number of fan blades to the number of rotors in the first turbine section being between about 3.3 and about 8.6.

15. The turbofan engine as recited in any preceding claim, wherein the speed reduction mechanism comprises an epicyclic gearbox, and optionally wherein the epicyclic gearbox provides a speed reduction ratio between about 2:1 and about 5:1.
